# EUROPÄISCHE PATENTANMELDUNG

(11) **EP 1 148 201 A2**
(43) Veröffentlichungstag der Anmeldung: **24.10.2001**
(21) Anmeldenummer: 01107540.5
(22) Anmeldetag: 27.03.2001
(51) Int. Cl.: E05F 15/00, E05F 15/10, B60R 7/06

(54) **Antrieb zum Öffnen und Schliessen eines Deckels in einem Kraftwagen**

(30) Priorität: 20.04.2000 DE 10019564; 08.09.2000 DE 10044557
(71) Anmelder: fischerwerke Artur Fischer GmbH & Co. KG, 72178 Waldachtal (DE); DaimlerChrysler AG, 70567 Stuttgart (DE)
(72) Erfinder: Köpff, Ralf, 72280 Dornstetten (DE); Breunig, Steffen, 74834 Elztal (DE)

(57) **Zusammenfassung**

Die Erfindung betrifft einen Antrieb zum Öffnen und Schließen eines Deckels in einem Kraftwagen. Die Erfindung schlägt vor, den Antrieb mit einem Hebel (10) auszubilden, der eine Rasteinrichtung (28, 30), beispielweise einen Federstift (30), der durch Federkraft in eine Rastkerbe (28) gedrückt wird, aufweist, die bei Überschreiten einer vorgegebenen Kraft ausrastet und dadurch einen Elektromotor zum Öffnen und Schließen des Deckels vom Deckel trennt. Durch den erfindungsgemäßen Hebel (10) ist es zum einen möglich, den Deckel auch bei Ausfall des Elektromotors durch Ausrasten des Hebel (10) von Hand zu öffnen. Zum anderen bildet der Hebels (10) eine Überlastsicherung für den Elektromotor bei blockiertem Deckel (Figur 2).

## Beschreibung

Die Erfindung betrifft einen Antrieb zum Öffnen und Schließen eines Deckels in einem Kraftwagen mit den Merkmalen des Oberbegriffs des Anspruchs 1.

Der Deckel ist insbesondere als Deckel eines Handschuh- oder sonstigen Ablagefachs in einem Kraftwagen und/oder als Abdeckung eines Autoradios, CD-Wechslers oder dergleichen in den Kraftwagen eingebauten Gerät vorgesehen. Im Deckel können Bedienelemente des Kraftwagens wie beispielsweise Regler oder Schalter für Sitzheizung, Warnblinkanlage und dgl. mehr eingebaut sein, die immer, also bei geöffnetem und geschlossenem Deckel, zugänglich sein müssen oder sein sollen. Es ist vorgesehen, dass der Deckel grundsätzlich geschlossen ist und nur bei Bedarf beispielsweise auf Tastendruck elektromotorisch für eine begrenzte Zeit von beispielweise 30 Sekunden geöffnet wird. Anschließend schließt der Deckel automatisch und elektromotorisch wieder, so dass bei einem Unfall keine Gegenstände aus dem Ablagefach herausfallen können.

Der erfindungsgemäße Antrieb weist einen Elektromotor auf, der über ein Wegübertragungselement, beispielsweise eine Schub- und Druckstange, den Deckel, der ebenfalls dem Antrieb zugerechnet wird, bewegt. Es besteht das Problem, dass beispielsweise bei Stromausfall, defekter Steuerung des Antriebs, einem Defekt des Elektromotors oder eines eventuellen Untersetzungsgetriebes sich der Deckel nicht öffnen lässt. Es kann jedoch wichtig sein, den Deckel auch in solchen Fällen öffnen zu können, um beispielsweise in einem vom Deckel verschlossenen Ablagefach enthaltene Gegenstände wie wichtige Medikamente, Papiere oder dgl. entnehmen zu können.
Der Erfindung liegt daher die Aufgabe zugrunde, einen Antrieb der vorstehend erläuterten Art so auszubilden, dass ein Öffnen des Deckels bei Ausfall des Antriebs möglich ist.

Dies Aufgabe wird erfindungsgemäß durch die Merkmale des Anspruchs 1 gelöst. Der erfindungsgemäße Antrieb weist eine Trenneinrichtung auf, die bei Überschreiten einer vorgegebenen am Deckel angreifenden Kraft den Deckel vom Elektromotor trennt. Der Deckel kann dadurch von Hand ohne Bewegung des Elektromotors geöffnet werden. Die erfindungsgemäße Trenneinrichtung kann beispielsweise das Wegübertragungselement vom Elektromotor trennen oder auch das Wegübertragungselement selbst unterbrechen.

Die Erfindung hat den bereits genannten Vorteil, dass sich der Deckel unabhängig vom Elektromotor von Hand öffnen lässt. Weiterer Vorteil der Erfindung ist, dass die Trenneinrichtung einen Überlastschutz für den Elektromotor bildet, die den Deckel vom Elektromotor trennt, wenn der Deckel bei laufendem Elektromotor blockiert ist.

Die Trenneinrichtung kann beispielsweise reibschlüssig ausgebildet sein und eine begrenzte Kraft bzw. ein begrenztes Moment übertragen, die zum Öffnen und Schließen des Deckels normalerweise ausreicht. Bei einer Ausgestaltung der Erfindung ist ein Rastelement als Trenneinrichtung vorgesehen, das bei Überschreiten der vorgegebenen Kraft ausrastet und dadurch den Antrieb des Deckels mechanisch vom Elektromotor trennt. Dies hat den Vorteil, dass die zum Trennen notwendige Kraft verhältnismäßig genau einstellbar und bei einer Massenherstellung einhaltbar ist. Weiterer Vorteil ist, dass nach Ausrasten des Rastelements der Deckel leichtgängig bewegbar ist. Hinzu kommt der Vorteil, dass sich das Rastelement nach Instandsetzen des Antriebs wieder einrasten lässt, der erfindungsgemäße Antrieb wird durch Überschreiten der vorgegebenen Kraft nicht beschädigt.

In bevorzugter Ausgestaltung der Erfindung weist das Wegübertragungselement einen Hebel auf, der eine Drehbewegung des Elektromotors in eine translatorische Bewegung zum Öffnen und Schließen des Deckels umsetzt. Dieser Hebel bildet zugleich die Trenneinrichtung, die bei Überschreiten der vorgegebenen Kraft den Deckel vom Elektromotor trennt.

Bei einer Weiterbildung der Erfindung ist der Hebel als Rastelement ausgebildet.

Bei einer Ausgestaltung der Erfindung weist das Rastelement einen Rastkörper, beispielsweise eine Kugel oder einen Stift auf, der von einem Federelement in eine Rastkerbe gedrückt wird. Durch Überwinden einer Rastkraft ist der Rastkörper aus der Rastkerbe ausrastbar, wodurch der Deckel vom Elektromotor getrennt ist.

Bei einer Ausgestaltung der Erfindung weist der Antrieb einen Einschub auf, der schubladenartig verschiebbar geführt ist. Der Einschub bildet beispielsweise ein Ablagefach oder eine Aufnahme zum Einbau eines Autoradios, CD-Wechslers oder dergleichen. Der Einschub ist mit dem Elektromotor insbesondere über den vorstehend erläuterten Hebel verschiebbar. Der Einschub bildet ein Wegübertragungselement, das eine Antriebsbewegung des Elektromotors auf den Deckel überträgt, der schwenkbar mit dem Einschub verbunden ist. Der Deckel weist eine Führung auf, die ihn zur Seite bewegt, wenn der Einschub in eine ausgezogene Stellung verschoben wird. Zur Seite bewegt bedeutet, dass der Deckel in eine Stellung bewegt wird, in der der Einschub zugänglich ist. Der Deckel kann dazu nach oben, unten oder zur Seite bewegt werden. Wird der Einschub wieder eingeschoben, bewegt sich der Deckel zurück in eine Schließstellung, in der er den Einschub abdeckt. Diese Ausgestaltung der Erfindung kann gemeinsam mit der erfindungsgemäßen Trenneinrichtung oder auch ohne diese verwirklicht sein.

Bei einer Ausgestaltung der Erfindung weist der Deckel mindestens einen Arm auf, über den er beispielsweise mittels einer Zapfenverbindung schwenkbar mit dem Einschub verbunden ist. Über die Zapfverbindung lässt sich der Deckel durch Verschieben des Einschubs antreiben.

In bevorzugter Ausgestaltung weist der Deckel eine Kulissenführung auf. Dabei verläuft vorzugsweise eine Kulissenbahn in einem Winkel zur Verschieberichtung des Einschubs und bewirkt dadurch die gewünschte Bewegung des Deckels zur Seite, wenn der Einschub ausgezogen wird. Beim Einschieben des Einschubs bewegt die Kulissenführung den Deckel wieder zurück in die den Einschub verschließende Stellung. Die Kulissenbahn muss nicht gerade sein, sie kann beispielsweise auch bogenförmig verlaufen. Die Kulissenbahn kann ortsfest beispielsweise in einem Gehäuse angeordnet sein, in welchem der Einschub verschiebbar aufgenommen ist. Die Kulissenbahn kann ebenso in dem Arm des Deckels angeordnet sein und es greift ein ortsfester Kulissenzapfen, Kulissenstein oder dgl. in die Kulissenbahn ein.

Die Erfindung wird nachfolgend anhand eines in der Zeichnung dargestellten Ausführungsbeispiels näher erläutert. Es zeigen:
- Figur 1: einen Hebel eines erfindungsgemäßen Antriebs in perspektivischer Darstellung;
- Figur 2: den Hebel aus Figur 1 im Längsschnitt; entlang Linie II - II in Figur 3;
- Figur 3: den Hebel aus Figur 1 in Draufsicht; und
- Figur 4: eine teilweise geschnittene Seitenansicht eines erfindungsgemäßen An- triebs.

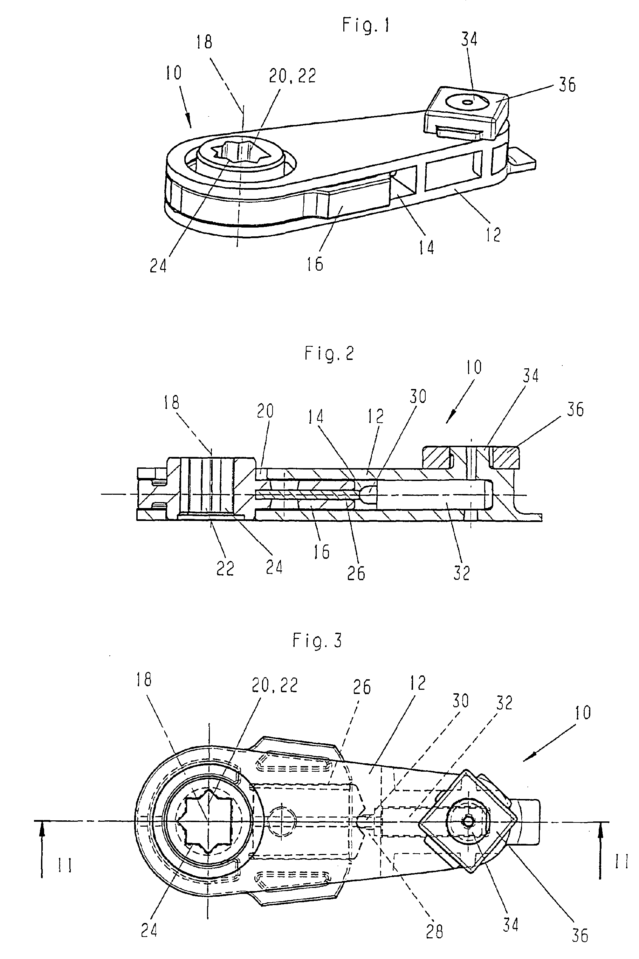

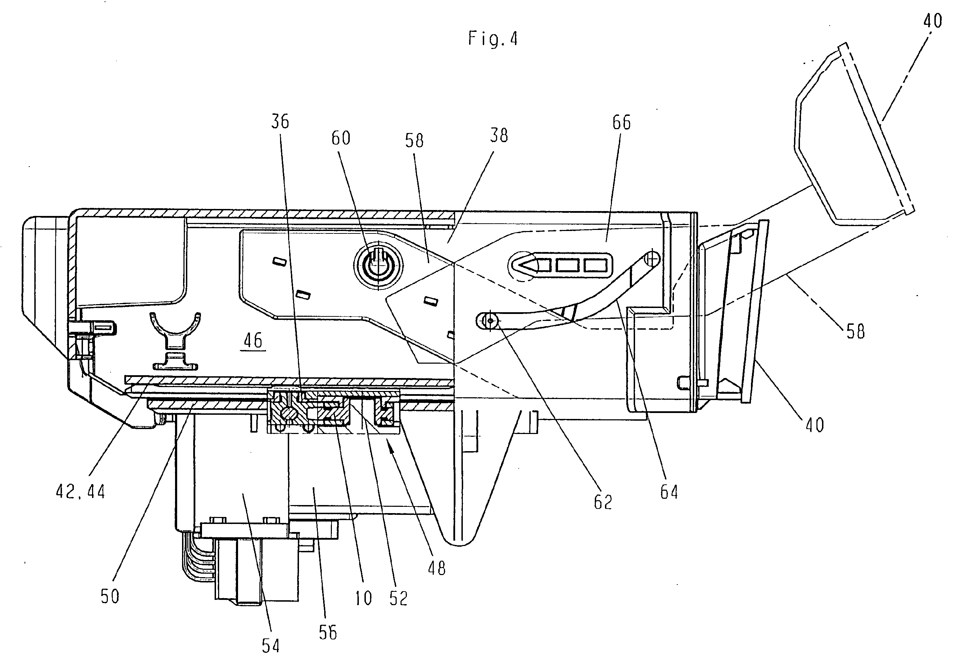

Der in Figuren 1 bis 3 dargestellte Hebel 10 ist Bestandteil eines erfindungsgemäßen Antriebs, der weiter unten anhand Figur 4 erläutert werden wird. Der Hebel 10 weist ein im Querschnitt rechteckiges im Verhältnis zu seiner Breite niedriges Grundteil 12 auf, dessen Höhe über seine gesamte Länge konstant ist und dessen Breite von einem zum anderen Ende abnimmt. Die beiden Enden des Grundteils 12 sind kreisbogenförmig gerundet (Figur 3). Das Grundteil 12 ist mit einem Schlitz 14 versehen, der sich über ungefähr 2/3 der Länge des Hebels 10 erstreckt und der in einer Ebene mit dem Hebel 10, also in einer Querrichtung durch das Grundteil 12 hindurch geht.

In dem Schlitz 14 im Grundteil 12 liegt ein Kupplungshebel 16 ein, der um eine gedachte Drehachse 18 des Hebels 10 gegenüber dem Grundteil 12 drehbar ist. Konzentrisch zur Drehachse 18, die senkrecht zum Schlitz 14 verläuft, sind das Grundteil 12 und der einliegende Kupplungshebel 16 mit einem deckungsgleich angeordneten Loch 20, 22 durchsetzt, wobei das Loch 20,22 im Kupplungshebel 16 ein Kerbzahnprofil 24 zum drehfesten Eingriff einer in Figuren 1 - 3 nicht dargestellten Motor- oder Getriebewelle durch Formschluss aufweist.

Das Grundteil 12 und der Kupplungshebel 16 bestehen aus Kunststoff. Zur Verstärkung des Kupplungshebels 16 ist in dessen dem geschlossenen Ende des Schlitzes 14 zugewandten Ende ein Metallplättchen 26 eingesetzt, welches in Figur 3 mit Strichlinien angedeutet ist. An einem dem geschlossenen Ende des Schlitzes 14 zugewandten Rand weist das Metallplättchen 26 eine halbrunde Rastkerbe 28 auf.

In ein dem Kupplungshebel 16 abgewandtes Ende des Grundteils 12 ist ein Federstift 30 eingesetzt. Der Federstift 30 liegt in einem zylindrischen Gehäuse 32 ein und wird von einer in der Zeichnung nicht sichtbaren, in das Gehäuse 32 eingesetzten Druckfeder in die Rastkerbe 28 des in den Kupplungshebel 16 eingesetzten Metallplättchens 26 gedrückt. Der Federstift 30 mit seinem Gehäuse 32 ist in Figur 3 ebenfalls mit Strichlinien angedeutet.

Auf einer Oberseite an einem der Drehachse 18 fernen Ende weist das Grundteil 12 einen nach oben abstehenden Zapfen 34 auf, auf den drehbar ein in Draufsicht quadratisches Gleitstück 36 aufgesetzt ist.

Die Funktion des Hebels 10 ist folgende: Der Hebel 10 dient dazu, eine Drehbewegung in eine lineare Bewegung umzusetzen. Die Drehbewegung wird von einer in Figuren 1 - 3 nicht dargestellten Motor- oder Getriebewelle auf den im Grundteil 12 einliegenden Kupplungshebel 16 übertragen. Dazu weist die Motor- oder Getriebewelle ein zum Kerbzahnprofil 24 des Kupplungshebels 16 komplementäres Kerbzahnprofil auf, mit dem die Motor- oder Getriebewelle drehfest in den Kupplungshebel 16 eingreift. Über den in der Rastkerbe 28 des im Kupplungshebel 16 einliegenden Metallplätzchens 26 einliegenden Federstift 30 wird die Drehbewegung des Kupplungshebels 16 auf das Grundteil 12 übertragen, so dass sich das Gleitstück 36 auf einer Kreisbahn bewegt. Die Kreisbewegung des Gleitstücks 36 kann zum Verschieben eines in Figuren 1 - 3 nicht dargestellten Elements genutzt werden, mit dem das Gleitstück 36 in Eingriff steht.

Bei einer Überlastung des Hebels 10 wird der Federstift 30 außer Eingriff von der Rastkerbe 28 gedrückt, so dass das Grundteil 12 mit dem Gleitstück 36 frei drehbar gegenüber dem im Grundteil 12 einliegenden Kupplungshebel 16 ist, wobei der Kupplungshebel 16 über sein Kerbzahnprofil 24 drehfest mit der nicht dargestellten Motor- oder Getriebewelle ist. Diese Möglichkeit des Ausrastens des Grundteils 12 vom Kupplungshebel 16 hat zum einen den Zweck, dass bei einer Blockierung des Hebels 10 am Gleitstück 36 der Motor weiter drehen kann und nicht überlastet wird. Zum anderen lässt sich bei nicht drehendem Motor beispielsweise in Folge Stromausfalls, Defekt oder Ausfall einer Motorsteuerung durch Zug oder Druck am Gleitstück 36 das Grundteil 12 aus dem Kupplungshebel 16 ausrasten und gegenüber dem Kupplungshebel 16 bewegen. Nach Behebung eines derartigen Fehlers wird das Grundteil 12 wieder in die Rastkerbe 28 eingerastet und der Hebel 10 ist wieder voll funktionsfähig. Der Hebel 10 wird also durch das Ausrasten nicht beschädigt.

Aus vorstehender Erläuterung des Hebels 10 ergibt sich, dass dieser mit dem Federstift 30, der mit der Rastkerbe 28 zusammenwirkt, ein Rastelement aufweist, das eine Trenneinrichtung 28, 30 des Hebels 10 bildet.

Figur 4 zeigt die Verwendung des Hebels 10 aus Figuren 1 bis 3 als Bestandteil eines erfindungsgemäßen Antriebs. Der erfindungsgemäße Antrieb dient im dargestellten Ausführungsbeispiel zum Öffnen und Schließen eines Fachs, beispielsweise eines Ablagefachs (Handschuhfach) oder eines Fachs zum Einbau eines Autoradios, CD-Wechsler oder dgl. Das Fach weist ein kubisches Gehäuse 38 mit rechteckigem Querschnitt auf. Das Gehäuse 38 ist zum Einbau beispielsweise in ein Armaturenbrett eines nicht dargestellten Kraftwagens vorgesehen. An einer Vorderseite ist das Gehäuse 38 offen und mit einem Deckel 40 verschließbar. In den Deckel 40 können Bedienelemente wie beispielsweise Schalter für eine Sitzheizung , Warnblinkanlage oder Instrumente ( nicht dargestellt) eingesetzt sein, die sowohl bei geschlossenem als auch bei geöffnetem Deckel 40 zugänglich und ablesbar sind. Die geschlossene Stellung des Deckels 40 ist in Figur 4 mit durchgezogenen und die geöffnete Stellung des Deckels 40 mit Strichpunktlinien dargestellt.

Im Gehäuse 38 ist ein Einschub 42 nach Art einer Schublade verschiebbar angeordnet. Der Einschub 42 weist einen Boden 44 und Seitenwände 46 auf, von denen aufgrund der Schnittdarstellung im linken Teil von Figur 4 eine dem Betrachter ferne Seitenwand 46 sichtbar ist.

Unterhalb des Bodens 44 des Einschubs 42 ist der Hebel 10 in einer Öffnung 48 eines Gehäusebodens 50 angeordnet. Die Öffnung 48 gibt dem Hebel 10 Freiraum zum Verschwenken. Der Hebel 10 ist wie zu Figuren 1 bis 3 beschrieben mit seinem Kupplungshebel 16 drehfest auf eine Getriebewelle 52 aufgesetzt. Die Getriebewelle 52 weist ein zum Kerbzahnprofil 24 des Hebels 10 komplementäres Kerbzahnprofil auf. Zum Verschwenken des Hebels 10 ist an einer Unterseite des Gehäusebodens 50 ein Elektromotor 54 mit angeflanschtem Getriebe 56 angebracht, aus dem die Getriebewelle 52 vorsteht und mit der sich der Hebel 10 schwenken lässt. Mit seinem Gleitstück 36 liegt der Hebel 10 in einer Gleitstückaufnahme im Boden 44 des Einschubs 46 ein, wobei die Gleitstückaufnahme in Draufsicht rechteckförmig ist, so dass sich das Gleitstück 36 in seitlicher Richtung des Einschubs 42, also quer zur Verschieberichtung, bewegen kann. Durch ein Schwenken des Hebels 10 wird der Einschub 42 translatorisch bewegt, er wird im Gehäuse 38 vor- und zurückverschoben, in der Zeichnung also nach rechts und links.

Der Deckel 40 weist Arme 58 auf, die seitlich jeweils an Innenseiten der Seitenwände 46 des Einschubs 42 angeordnet sind. Die Arme 58 des Deckels 40 weisen Löcher auf, mit denen sie auf Zapfen 60 aufgesetzt sind, die von den Seitenwänden 46 des Einschubs 42 nach Innen abstehen. Der Einschub 42 bildet ein Wegübertragungselement des erfindungsgemäßen Antriebs, das die Antriebsbewegung des Elektromotors 54 mit dem angeflanschten Getriebe 56 über den Hebel 10 auf die Arme 58 des Deckels 40 überträgt.

Die Arme 58 des Deckels 40 weisen nach Außen abstehende Kulissenzapfen 62 auf, die in Kulissenbahnen 64 in Seitenwänden 66 des Gehäuses 38 einliegen. Da der in Figur 4 rechts befindliche vordere Teil des Gehäuses 38 in Ansicht dargestellt ist, ist im vorderen Bereich 38 des Gehäuses 38 dessen dem Betrachter zugewandte Seitenwand 66 in Ansicht von außen zu sehen. Der Kulissenzapfen 62 der Arme 58 des Deckels 40 durchgreift in der Zeichnung nicht sichtbare Ausnehmungen der Seitenwände 46 des Einschubs 42. Die Kulissenzapfen 62 sind mit Abstand vor und unterhalb der Zapfen 60 angeordnet, die von den Seitenwänden 46 des Einschubs 42 nach innen stehen und auf die die Arme 58 des Deckels 40 schwenkbar aufgesetzt sind. Die Kulissenbahnen 64 verlaufen bogenförmig zunächst in etwa parallel zum Gehäuseboden 50 und weiter bogenförmig nach vorn/oben. Wird der Einschub 42 vom Elektromotor 54 über das Getriebe 56 und den Hebel 10 nach vorn, also in Figur 4 nach rechts, verschoben, bewegt er über die Zapfen 60 die Arme 58 des Deckels 40 nach vorn. Dabei gleiten die Kulissenzapfen 62 der Arme 58 in den Kulissenbahnen 64 nach vorn und nach oben, so dass sich der Deckel 40 wie dargestellt aus der Schließstellung, in der er das an der Vorderseite offene Gehäuse 38 verschließt, in eine schräg nach oben vor dem Gehäuse 38 befindliche, offene Stellung bewegt. In der offenen Stellung des Deckels 40 ist das Gehäuse 38 zugänglich. Wird der Einschub 42 vom Elektromotor 54 im Gehäuse 38 zurückverschoben, bewegt sich der Deckel 40 wieder in seine geschlossene, das Gehäuse 38 verschließende Stellung.

Ist der Antrieb des Hebels 10, also der Elektromotor 54 mit dem angeflanschten Getriebe 56, beispielsweise in Folge Defekts oder Stromausfalls nicht funktionsfähig, lässt sich der Deckel 40 manuell öffnen. Dazu wird in der geschlossenen Stellung des Deckels 40 am Deckel 40 gezogen. Über sein Arme 58 zieht der Deckel 40 dabei den Einschub 42 im Gehäuse 38 nach vorn. Dabei wird der Hebel 10 nach vorn geschwenkt. Wie zu Figuren 1 bis 3 beschrieben rastet der im Grundteil 12 des Hebels 10 einliegende Federstift 30 aus der Rastkerbe 28 des im Grundteil 12 schwenkbar einliegenden Kupplungshebel 16 aus, wodurch das das Gleitstück 36 tragende Grundteil 12 frei auf der Getriebewelle 52 schwenkbar ist. Durch Zug am Deckel 40 lässt sich der Hebel 10 ausrasten. Dabei muss zunächst kräftig am Deckel 40 gezogen werden, um den Hebel 10 auszurasten, nachdem der Hebel 10 ausgerastet ist, lässt sich der Deckel 40 leicht bewegen.

Im Falle dass der Deckel 40 oder der Einschub 42 blockiert sind und der Elektromotor 54 betätigt wird, rastet der Hebel 10 ebenfalls wie beschrieben aus, so dass der Motor 54 drehen kann und nicht überlastet wird. Nach Behebung des Fehlers wird der Hebel 10 durch manuelles Schließen oder auch Öffnen des Deckels 40 wieder eingerastet und ist damit wieder funktionsfähig.

## Patentansprüche

1. Antrieb zum Öffnen und Schließen eines Deckels in einem Kraftwagen, mit einem Elektromotor, mit einem Wegübertragungselement und mit dem Deckel, wobei das Wegübertragungselement eine Antriebsbewegung des Elektromotors auf den Deckel überträgt, **dadurch gekennzeichnet, dass** der Antrieb (10, 40, 42, 54, 56, 58) eine Trenneinrichtung (28, 30) aufweist, die bei Überschreiten einer vorgegebenen Kraft den Deckel (40) vom Motor (54) trennt.

2. Antrieb nach Anspruch 1, **dadurch gekennzeichnet, dass** die Trenneinrichtung (28, 30) ein Rastelement (28, 30) aufweist, das bei Überschreiten der vorgegebenen Kraft ausrastet.

3. Antrieb nach Anspruch 1, **dadurch gekennzeichnet, dass** das Wegübertragungselement (10, 42) einen Hebel (10) aufweist, der eine Drehbewegung des Elektromotors (54) in eine translatorische Bewegung zum Öffnen und Schließen des Deckels (40) umsetzt, und dass der Hebel (10) die Trenneinrichtung (28, 30) aufweist.

4. Antrieb nach Anspruch 3, **dadurch gekennzeichnet, dass** der Hebel (10) das Rastelement (28, 30) aufweist, das bei Überschreiten der vorgegebenen Kraft ausrastet.

5. Antrieb nach einem der Ansprüche 2 oder 4, **dadurch gekennzeichnet, dass** das Rastelement (28, 30) einen Rastkörper (30) aufweist, der von einem Federelement in eine Rastkerbe (28) gedrückt wird und durch Überwinden einer Rastkraft ausrastbar ist.

6. Antrieb zum Öffnen und Schließen eines Deckels in einem Kraftwagen, insbesondere nach Anspruch 1, mit einem Elektromotor, mit einem schubladenartig verschiebbar geführten Einschub, der mit dem Elektromotor verschiebbar ist, und mit einem Deckel, wobei der Einschub ein Wegübertragungselement bildet, das eine Antriebsbewegung des Elektromotors auf den Deckel überträgt, **dadurch gekennzeichnet, dass** der Deckel (40) schwenkbar mit dem Einschub (42) verbunden ist, und dass der Deckel (40) eine Führung (62, 64) aufweist, die den Deckel (40) zur Seite bewegt, wenn der Einschub (42) in eine ausgezogene Stellung verschoben wird.

7. Antrieb nach Anspruch 6, **dadurch gekennzeichnet, dass** der Deckel (40) mindestens einen Arm (58) aufweist, über den der Deckel (40) schwenkbar mit dem Einschub (42) verbunden ist.

8. Antrieb nach Anspruch 6, **dadurch gekennzeichnet, dass** der Deckel (40) eine Kulissenführung (62, 64) aufweist.

9. Antrieb nach Anspruch 8, **dadurch gekennzeichnet, dass** die Kulissenführung (62, 64) eine Kulissenbahn (64) aufweist, die in einem Winkel zur Verschieberichtung des Einschubs (42) verläuft.
